# EUROPEAN PATENT SPECIFICATION

(11) **EP 3 909 827 B1**
(45) Date of publication and mention of the grant of the patent: **22.03.2023**
(21) Application number: 21167620.0
(22) Date of filing: 09.04.2021
(51) Int. Cl.: B61D 19/02

(54) **DOOR LEAF FOR RAILROAD VEHICLE, FASTENING STRUCTURE, AND METHOD OF MANUFACTURING DOOR LEAF FOR RAILROAD VEHICLE**
TÜRBLATT FÜR EIN SCHIENENFAHRZEUG, BEFESTIGUNGSSTRUKTUR UND VERFAHREN ZUR HERSTELLUNG EINES TÜRBLATTES FÜR EIN SCHIENENFAHRZEUG
VANTAIL DE PORTE POUR VÉHICULE FERROVIAIRE, STRUCTURE DE FIXATION ET PROCÉDÉ DE FABRICATION D'UN VANTAIL DE PORTE POUR VÉHICULE FERROVIAIRE

(30) Priority: 15.05.2020 JP 2020086332
(43) Date of publication of application: 17.11.2021
(73) Proprietor: Nabtesco Corporation, Tokyo 102-0093 (JP)
(72) Inventor: SATO, Kazuma, Tokyo (JP); SATO, Koji, Tokyo (JP)
(74) Representative: Grünecker Patent- und Rechtsanwälte PartG mbB

(56) References cited:
- CN-U- 207 955 649
- DE-A1-102012 107 422
- DE-U1- 9 408 079
- DE-U1- 29 708 272
- FR-A1- 2 861 818
- JP-A- H1 162 939
- KR-A- 20040 081 981
- US-A- 5 294 225

## Description

The present invention relates to a door leaf for a railroad vehicle, a fastening structure, and a method of manufacturing a door leaf for a railroad vehicle.

Conventional door leaves for railroad vehicles include a frame constituted by an upper edge frame, a lower edge frame, a leading edge frame, and a trailing edge frame (see, for example, Japanese Laid-Open Patent Publication No. 4-57481 ("the '481 Publication").

In the frame disclosed in the '481 Publication, the leading and trailing edge frames extend in the vertical direction, which is the longitudinal direction of the door leaf, and the upper and lower edge frames extend in the horizontal direction, which is the transverse direction of the door leaf.

The door leaf includes inside and outside plates respectively mounted to the inside and outside surfaces of the frame, which respectively face the inside and outside of the railroad vehicle.

Prior art document KR 2004 0081981 discloses a frame of that kind as well as an assembling tapping screw screwed into a prepared hole, wherein walls preparing the tapping hole have a non contact region.

In the above-described door leaf, the edge frames constituting the frame of the door leaf are welded to each other. When the welding is employed, the welding may cause distortion. This necessitates correction to satisfy the required accuracy and thus requires work. The same problems arise not only in door leaves but also in any products as long as they have parts that need to be connected together.

The present invention is made in light of the above, and one object thereof is to provide a fastening structure, a door leaf for a railroad vehicle, and a method of manufacturing a door leaf for a railroad vehicle, which can provide for a readily manufacturable door leaf.

In order to achieve the above object and in accordance with one aspect of the present invention, provided is a door leaf for a railroad vehicle, according to claim 2.

The door leaf includes a first member, a second member, and a tapping screw. The tapping screw is to be screwed into a prepared hole provided in the second member while tapping the prepared hole, so that the tapping screw fastens together the first and second members. Walls defining the prepared hole in the second member have, in a plane orthogonal to an axial direction of the tapping screw, a non-contact region where the walls do not touch the tapping screw.

If an attempt is made to fasten together the first and second members using the tapping screw, the tightening torque increases to such a degree that the tapping screw can no longer be tightened before the tapping screw is completely screwed in. According to the above design, the prepared hole is not tapped along the entire circumference thereof but has a non-contact region where the walls defining the prepared hole do not touch the tapping screw and thus are not tapped. This can reduce the tightening torque produced when the tapping screw is tightened. Accordingly, the tapping screw can be used to fasten together the first and second members. As a result, the railroad vehicle door leaf can be readily manufactured.

In the above-described railroad vehicle door leaf, it is preferable that, in the plane orthogonal to the axial direction of the tapping screw, the non-contact region is positioned outside an imaginary circle defining a major diameter of the tapping screw.

In the above-described railroad vehicle door leaf, it is preferable that the walls defining the prepared hole have, in the plane orthogonal to the axial direction of the tapping screw, a contact region where the walls touch the tapping screw and that, of the walls in the contact region, one or more walls extending in a circumferential direction of the tapping screw are, in the plane orthogonal to the axial direction of the tapping screw, parallel to a circumference of an imaginary circle defining a major diameter of the tapping screw and centered on a center of the prepared hole.

In the above-described railroad vehicle door leaf, it is preferable that the walls defining the prepared hole have, in the plane orthogonal to the axial direction of the tapping screw, a contact region where the walls touch the tapping screw, and that a wall surface in the contact region has, in the plane orthogonal to the axial direction of the tapping screw, a portion outside an imaginary circle defining a minor diameter of the tapping screw and centered on a center of the prepared hole.

In the above-described railroad vehicle door leaf, it is preferable that the walls defining the prepared hole are arranged in a point-symmetric manner and centered on a central axis of the prepared hole.

In the above-described railroad vehicle door leaf, the non-contact region accounts for, in the plane orthogonal to the axial direction of the tapping screw, 20% to 80% of a circumference of an imaginary circle defining a major diameter of the tapping screw.

In the above-described railroad vehicle door leaf, it is preferable that, of a volume between imaginary co-axial cylinders defining major and minor diameters of the tapping screw, a not-to-be-tapped volume accounts for 20% to 80%.

In the above-described railroad vehicle door leaf, it is preferable that the walls defining the prepared hole are divided into:
in a plane orthogonal to the axial direction of the tapping screw at a first position, a first contact region where the walls touch the tapping screw and a first non-contact region where the walls do not touch the tapping screw; and
in a plane orthogonal to the axial direction of the tapping screw at a second position, where the second position is closer in the axial direction of the tapping screw to a tip of the tapping screw than the first position is, a second contact region where the walls touch the tapping screw and a second non-contact region where the walls do not touch the tapping screw, and that the ratio of the first non-contact region to the sum of the first contact and non-contact regions is higher than the ratio of the second non-contact region to the sum of the second contact and non-contact regions.

In the above-described railroad vehicle door leaf, it is preferable that the non-contact region is provided in a partial region in the axial direction of the tapping screw.

In the above-described railroad vehicle door leaf, it is preferable that, in the non-contact region, an accommodating portion is further provided for accommodating chips produced during tapping by the tapping screw.

In the above-described railroad vehicle door leaf, it is preferable that the second member having the prepared hole provided therein is extrusion-molded.

In the above-described railroad vehicle door leaf, it is preferable that the door leaf includes a frame made up by vertical and horizontal frames, one of the first and second members is the vertical frame and the other of the first and second members is the horizontal frame.

In the above-described railroad vehicle door leaf, it is preferable that the first member is the vertical frame and the second member is the horizontal frame

In order to achieve the above object and in accordance with another aspect of the present invention, provided is a fastening structure for fastening together a first member and a second member, as in claim 1.

The fastening structure includes a tapping screw to be screwed into a prepared hole provided in the second member while tapping the prepared hole, so that the tapping screw fastens together the first and second members. Walls defining the prepared hole in the second member have, in a plane orthogonal to an axial direction of the tapping screw, a non-contact region as for the door leaf of claim 2, where the walls do not touch the tapping screw.

If an attempt is made to fasten together the first and second members using the tapping screw, the tightening torque increases to such a degree that the tapping screw can no longer be tightened before the tapping screw is completely screwed in. According to the above design, the prepared hole is not tapped along the entire circumference thereof but has a non-contact region where the walls defining the prepared hole do not touch the tapping screw and thus are not tapped. This can reduce the tightening torque produced when the tapping screw is tightened. Accordingly, the tapping screw can be used to fasten together the first and second members. As a result, the fastening structure can simplify the manufacturing process.

In order to achieve the above object and in accordance with another aspect of the present invention, provided is a method of manufacturing a door leaf for a railroad vehicle, as in claim 14.

The door leaf includes a first member and a second member. The second member is provided with a prepared hole into which a tapping screw is to be screwed. Walls defining the prepared hole have, in a plane orthogonal to an axial direction of the tapping screw, a non-contact region as for the door leaf of claim 2, where the walls do not
touch the tapping screw. The method includes fastening together the first and second members by screwing the tapping screw into the prepared hole in the second member while the tapping screw is tapping the prepared hole.

If an attempt is made to fasten together the first and second members using the tapping screw, the tightening torque increases to such a degree that the tapping screw can no longer be tightened before the tapping screw is completely screwed in. According to the above manufacturing method, the prepared hole is not tapped along the entire circumference thereof but has a non-contact region where the walls defining the prepared hole do not touch the tapping screw and thus are not tapped. This can reduce the tightening torque produced when the tapping screw is tightened. Accordingly, the tapping screw can be used to fasten together the first and second members. As a result, the railroad vehicle door leaf can be readily manufactured.

Other aspects and advantages of the present invention will be made apparent from the following description, taken in conjunction with the accompanying drawings, illustrating by way of example the principles of the present invention.

The invention, together with objects and advantages thereof, may best be understood by reference to the following description of the presently preferred embodiments together with the accompanying drawings in which:
Figs. 1A and 1B are respectively front and side views schematically show the structure of a door leaf for a railroad vehicle of a first embodiment according to the present invention;
Fig. 2 is a top enlarged view showing a fastening structure for the railroad vehicle door leaf of the first embodiment:
Fig. 3 is a side enlarged view showing the configuration of a horizontal frame of the railroad vehicle door leaf of the first embodiment:
Fig. 4 shows a tapping screw used in the railroad vehicle door leaf of the first embodiment;
Fig. 5 shows a prepared hole provided in the horizontal frame of the railroad vehicle door leaf of the first embodiment:
Fig. 6 shows a tapping screw being fastened with the prepared hole provided in the horizontal frame of the railroad vehicle door leaf of the first embodiment:
Fig. 7 shows a prepared hole of a second embodiment according to the present invention;
Fig. 8 shows a tapping screw being fastened with the prepared hole of the second embodiment;
Fig. 9 shows a prepared hole of a third embodiment according to the present invention;
Fig. 10 shows a tapping screw being fastened with the prepared hole of the third embodiment;
Fig. 11 shows a prepared hole of a fourth embodiment according to the present invention;
Fig. 12 shows a tapping screw being fastened with the prepared hole of the fourth embodiment;
Fig. 13 shows a prepared hole of a fifth embodiment according to the present invention; and
Fig. 14 shows a tapping screw being fastened with the prepared hole of the fifth embodiment.

### <First Embodiment>

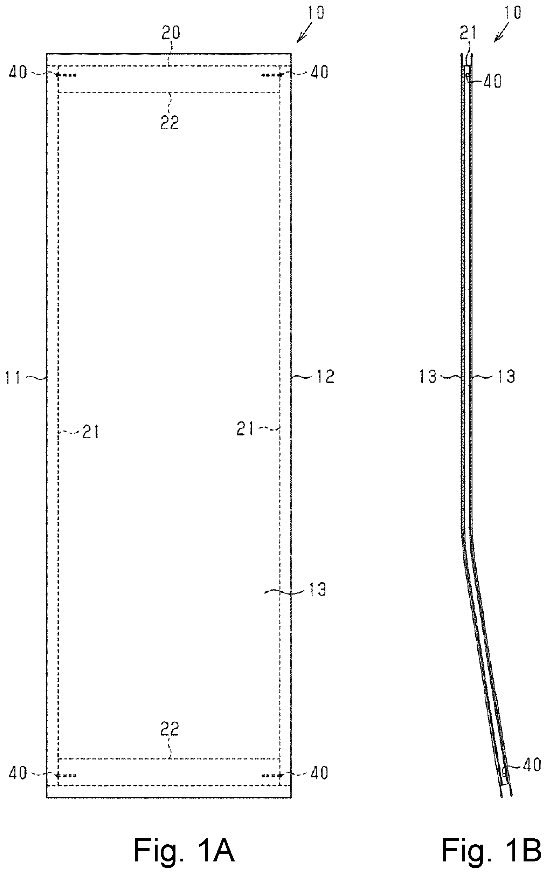

With reference to Figs. 1 to 6, a description is given of a door leaf for a railroad vehicle of a first embodiment according to the present invention. The door leaf is used for a sliding door of a railroad vehicle.

### <Door Leaf>

As shown in Fig. 1A, the left side of a door leaf 10 is a trailing edge 11, and the right side of the door leaf 10 is a leading edge 12. In the door leaf 10, the trailing and leading edges 11 and 12 have the same structure. As shown in Fig. 1B, the longitudinal section of the door leaf 10 is curved at its vertically lower portion toward the inside of the railroad vehicle.

The door leaf 10 includes a frame 20 and surface plates 13 serving as panels or underlying boards and joined to the surfaces of the frame 20. The frame 20 includes vertical frames 21 and horizontal frames 22 connected to the vertical frames 21 orthogonally to the vertical frames 21. The vertical and horizontal frames 21 and 22 are respectively referred to as first and second members. The vertical frames 21 are a part of the frame 20 extending in the vertical direction of the door leaf 10. The horizontal frames 22 are a part of the frame 20 extending in the horizontal direction of the door leaf 10. The frame 20 includes two vertical frames 21 and two horizontal frames 22, which together form a quadrilateral frame.

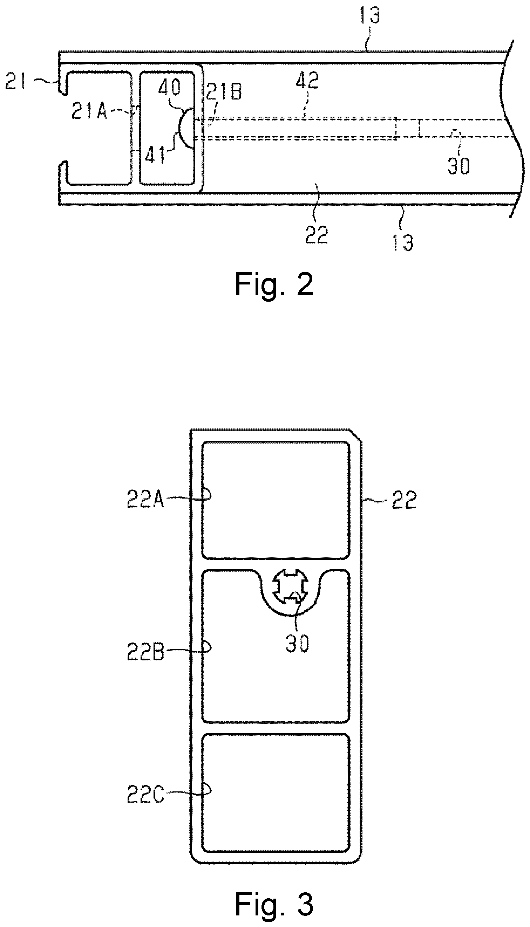

As shown in Fig. 2, the surface plates 13 are sticked using an adhesive onto the surfaces of the frame 20, which are shown on the lower and upper parts in the drawing. In other words, the frame 20 is sandwiched between the two surface plates 13.

### <Frame>

As shown in Fig. 2, the vertical frames 21 are extruded molded members shaped like a square cylinder and made of aluminum and made via extrusion molding. The horizontal frames 22 are extruded molded members shaped like a square rod and made of aluminum and made via extrusion molding.

The vertical and horizontal frames 21 and 22 are fastened together by a tapping screw 40. The tapping screw 40 penetrates the vertical frame 21 and is screwed into a prepared hole 30 provided in the horizontal frame 22 while tapping the prepared hole 30, so that the tapping screw 40 fastens together the vertical and horizontal frames 21 and 22. The vertical frame 21 has a first through hole 21A, through which a screw head 41 of the tapping screw 40 can pass, and a second through hole 21B, through which a threaded portion 42 of the tapping screw 40 can pass, formed therein. The second through hole 21B is sized such that the screw head 41 of the tapping screw 40 does not move through it. The entire portion of the tapping screw 40 penetrates the first through hole 21A, but only the threaded portion 42 penetrates the second through hole 21B. The vertical frame 21 is sandwiched and fastened between the screw head 41 of the tapping screw 40 and the horizontal frame 22. In other words, the vertical and horizontal frames 21 and 22 are fastened together via a fastening structure including the tapping screw 40 and prepared hole 30.

As shown in Fig. 3, the horizontal frame 22 is a member defining a first space 22A, a second space 22B, and a third space 22C. The horizontal frame 22 has, between the first space 22A and the second space 22B, the prepared hole 30, into which the tapping screw 40 is to be screwed. As formed by extrusion molding, the prepared hole 30 entirely extends through the horizontal frame 22.

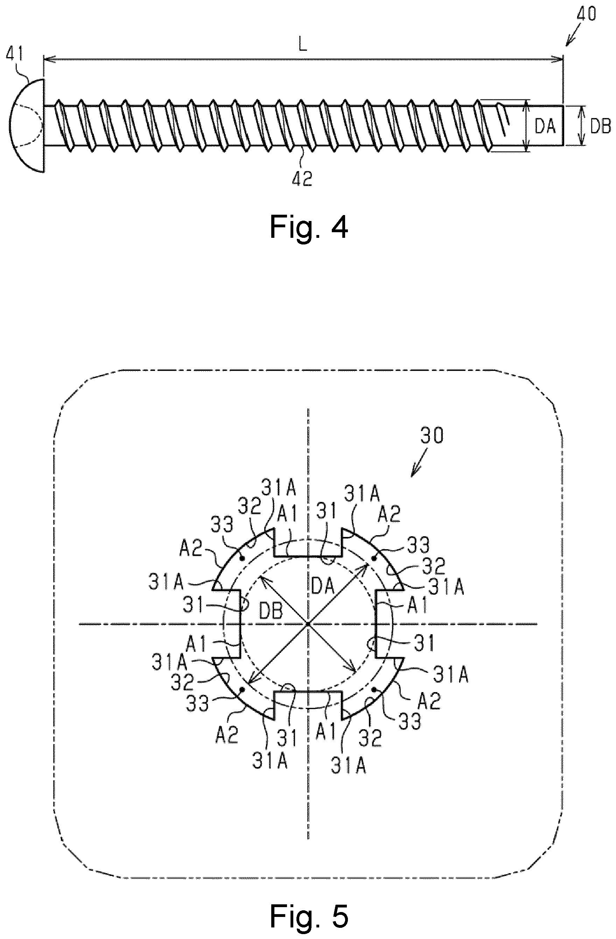

As shown in Fig. 4, the tapping screw 40 has the screw head 41 and the threaded portion 42. The screw head 41 is of a truss type. The tapping screw 40 is a type-B tapping screw with a coarse pitch, in which the threaded portion 42 has a blunt tip. The length of the threaded portion 42 is referred to as a screw length L. Since the prepared hole 30 extends through the horizontal frame 22, the axial length of the prepared hole 30 is greater than the screw length L. The major diameter DA represents the diameter of the imaginary co-axial cylinder that touches the crests of the threaded portion 42, and the minor diameter DB represents the diameter of the imaginary co-axial cylinder that touches the roots of the threaded portion 42.

As shown in Fig. 5, in the plane orthogonal to the axial direction of the tapping screw 40, the walls defining the prepared hole 30 in the horizontal frame 22 are divided into a contact region A1 where the walls are to touch the tapping screw 40 and a non-contact region A2 where the walls are not to touch the tapping screw 40. The contact region A1 is, in the plane orthogonal to the axial direction of the tapping screw 40, where the walls defining the prepared hole 30 are positioned inside the alternate long and two short dashes line representing the imaginary circle defining the major diameter DA of the tapping screw 40. The non-contact region A2 is, in the plane orthogonal to the axial direction of the tapping screw 40, where the walls defining the prepared hole 30 are positioned outside the alternate long and two short dashes line representing the imaginary circle defining the major diameter DA of the tapping screw 40. Of the walls defining the prepared hole 30, the walls positioned in the contact region A1 are referred to as tapping-target walls 31, and the walls in the non-contact region A2 are referred to as non-tapping-target walls 32. Here, the prepared hole 30 extends along the entire length of the horizontal frame 22.

The non-contact region A2 of the prepared hole 30 preferably accounts for, in the plane orthogonal to the axial direction of the tapping screw 40, 20% to 80% of the circumference of the imaginary circle defining the major diameter DA of the tapping screw 40. In this case, the torque required for tightening the tapping screw 40 is not too large, and therefore tapping can be performed satisfactorily. In addition, the portion to be tapped is not too small, and therefore a sufficient fastening force can be obtained. In the present embodiment, the non-contact region A2 accounts for approximately 50% of the circumference of the imaginary circle defining the major diameter DA of the tapping screw 40.

Of the volume between the imaginary co-axial cylinders defining the major and minor diameters DA and DB of the tapping screw 40, the not-to-be-tapped volume preferably accounts for 20% to 80%. In this case, the torque required for tightening the tapping screw 40 is not too large, and therefore tapping can be performed satisfactorily. In addition, the portion to be tapped is not too small, and therefore a sufficient fastening force can be obtained. In the present embodiment, the not-to-be-tapped volume accounts for approximately 50%.

The walls defining the prepared hole 30 are arranged in a point-symmetric manner and centered on the central axis of the prepared hole 30. In other words, the tapping-target walls 31 are point-symmetric, and so are the non-tapping-target walls 32. There are four tapping-target walls 31 and four non-tapping-target walls 32 alternating with each other.

The wall surface of the tapping-target walls 31 in the contact region A1 has, in the plane orthogonal to the axial direction of the tapping screw 40, a portion outside the imaginary circle defining the minor diameter DB of the tapping screw 40 and centered on the center of the prepared hole 30. Here, the wall surface defines the boundary surface between the prepared hole 30 and the horizontal frame 22. More specifically, in the plane orthogonal to the axial direction of the tapping screw 40, the wall surface of the tapping-target walls 31 draws a straight line, the circumferentially middle point of the wall surface of the tapping-target walls 31 touches the imaginary circle defining the minor diameter DB, and the ends of the wall surface of the tapping-target walls 31 are close to the imaginary circle defining the major diameter DA. In other words, when the tapping screw 40 is screwed into the prepared hole 30, the tightening torque is maximized at the middle portion of the tapping-target walls 31. As the tapping screw 40 is increasingly screwed into the prepared hole 30, the contact area between the tapping screw 40 and the tapping-target walls 31 gradually increases, which in turn increases the tightening torque. Accordingly, when compared with the case where the tapping screw 40 evenly touches the tapping-target walls, the tightening torque can be reduced.

The non-tapping-target walls 32 in the non-contact region A2 draw, in the plane orthogonal to the axial direction of the tapping screw 40, a curved line parallel to the circumference of the imaginary circle defining the major diameter DA of the tapping screw 40 and centered on the center of the prepared hole 30.

In the non-contact region A2, an accommodating portion 33 is provided for accommodating the chips produced during the tapping by the tapping screw 40. The accommodating portion 33 is positioned outside the imaginary circle defining the major diameter DA of the tapping screw 40 and demarcated by the non-tapping-target walls 32 and side surfaces 31A of the tapping-target walls 31.

### <Manufacturing Method>

The following describes the method of manufacturing the door leaf 10.

To begin with, as shown in Fig. 2, the second through hole 21B in the vertical frame 21 is aligned with the prepared hole 30 in the horizontal frame 22, and the vertical frame 22 is brought into contact with the vertical frame 21.

Subsequently, the tapping screw 40 is inserted through the first through hole 21A and then through the second through hole 21B, and screwed in by being rotated with a tool.

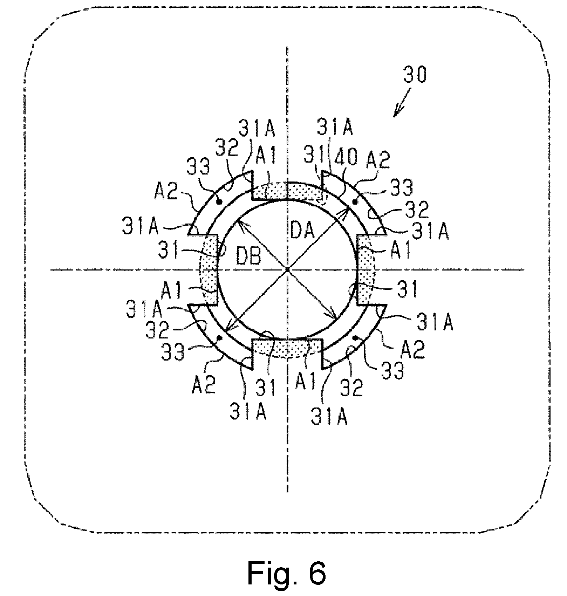

As shown in Fig. 6, the tapping screw 40 is screwed into the prepared hole 30 while tapping the contact region A1 of the prepared hole 30. In other words, the tapping-target walls 31 of the prepared hole 30, which are positioned between the imaginary circles representing the major and minor diameters DA and DB, are tapped. The dotted portions of the tapping-target walls 31 are tapped. In the upper right section of the drawing, when seen in the axial direction of the tapping screw 40, the crests of the tapping screw 40 are positioned above the tapping-target walls 31. Here, the non-contact region A2 of the prepared hole 30 does not touch the tapping screw 40 and is thus not tapped. The chips produced by the tapping screw 40 are accommodated in the accommodating portion 33 of the prepared hole 30 or back in the prepared hole 30.

If a tapping-target wall extends along the entire circumference of the prepared hole 30 and is positioned between the imaginary circles defining the major and minor diameters DA and DB, the tightening torque increases to such an extent that the tapping screw 40 can no longer be tightened before the screwing is completed. To address this issue, the non-contact region A2 is provided in the prepared hole 30. This can reduce the to-be-tapped area in the plane orthogonal to the axial direction of the tapping screw 40, thereby lowering the tightening torque. The tapping-target walls 31 are gradually removed such that the middle portion is first removed and the tapping width gradually increases. Accordingly, the tightening torque is maximized at the middle of the tapping-target wall 31. In this manner, less tightening torque can be produced on the tapping-target walls 31.

After this, as shown in Fig. 2, the frame 20, which is constituted by the two vertical frames 21 and the two horizontal frames 22 fastened together, is sandwiched between the two surface plates 13. An adhesive is applied onto the surfaces of the frame 20, and the surface plates 13 are sticked onto the surfaces of the frame 20. Accordingly, the door leaf 10 can be readily manufactured without the use of welding on the frame 20. The fastening structure using the tapping screw 40 is especially beneficial for the door leaf 10 having the curved lower portion since the welding may change the curving and thus require correction.

Advantageous effects of the first embodiment will be now described.
(1) The prepared hole 30 is not tapped along the entire circumference thereof but has the non-contact region A2 where the walls defining the prepared hole 30 do not touch the tapping screw 40 and thus are not tapped. This can reduce the tightening torque produced when the tapping screw 40 is tightened. Accordingly, the tapping screw 40 can be used to fasten together the vertical and horizontal frames 21 and 22. Accordingly, the railroad vehicle door leaf 10 can be manufactured readily without the use of welding, which requires labor.
(2) Since the non-tapping-target walls 32 defining the prepared hole 30 are positioned outside the imaginary circle defining the major diameter DA of the tapping screw 40, they can serve as the non-contact region A2 where the walls do not touch the tapping screw 40 when the tapping screw 40 is tightened and thus are not tapped.
(3) The first embodiment can reduce the tightening torque produced by the tapping screw 40 during the tapping, when compared with the case where the wall surface of the tapping-target walls 31 in the contact region A1 does not have a portion outside the imaginary circle defining the minor diameter DB of the tapping screw 40, in other words, the contact region A1 is entirely inside the imaginary circle defining the minor diameter.
(4) When the tapping screw 40 is tightened, the walls defining the prepared hole 30 abut the tapping screw 40 at point-symmetric positions. Accordingly, the tapping screw 40 can be positioned at the right position easily and thus stably tightened.
(5) The first embodiment can reduce the tightening torque produced when the tapping screw 40 is tightened. Accordingly, the tapping screw 40 can be used to fasten together the vertical and horizontal frames 21 and 22.
(6) Since the accommodating portion 33 can accommodates therein the chips, the chips are prevented from coming between the tapping screw 40 and the contact region A1. This can accordingly reduce the increase in tightening torque.
(7) Since extrusion molding is employed to make the horizontal frames 22 with the prepared hole 30, even the prepared hole 30 having the complex shape can be successfully shaped. The extrusion molding eliminates the need of separately shaping the prepared hole 30.

### <Second Embodiment>

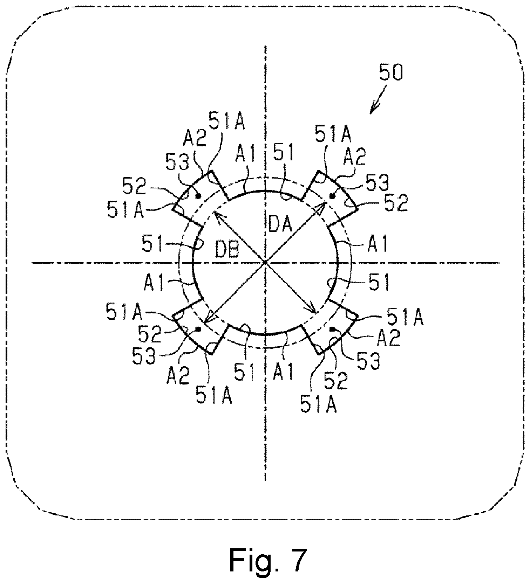

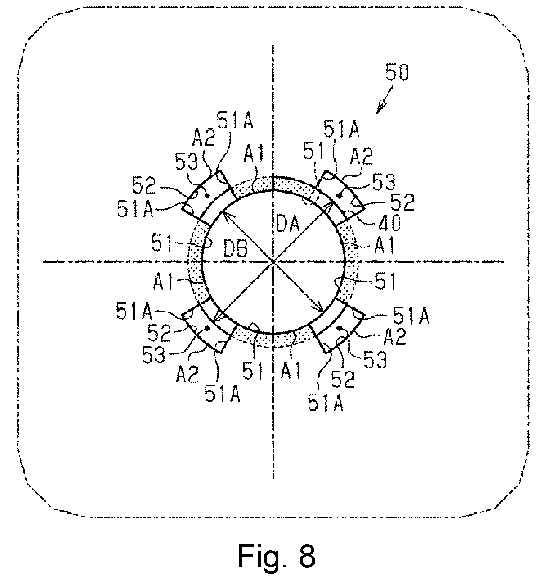

With reference to Figs. 7 and 8, a description is given of a door leaf for a railroad vehicle of a second embodiment according to the present invention. The second embodiment is different from the first embodiment in terms of the shape of the prepared hole. The following description will be focused on the differences from the first embodiment.

As shown in Figs. 7 and 8, the horizontal frame 22 has a prepared hole 50 formed therein, into which the tapping screw 40 is to be screwed. In the plane orthogonal to the axial direction of the tapping screw 40, the walls defining the prepared hole 50 are divided into a contact region A1 where the walls are tapped by the tapping screw 40 and a non-contact region A2 where the walls do not touch the tapping screw 40 and are thus not tapped. The contact region A1 is, in the plane orthogonal to the axial direction of the tapping screw 40, where the walls defining the prepared hole 50 are positioned inside the alternate long and two short dashes line representing the imaginary circle defining the major diameter DA of the tapping screw 40. The non-contact region A2 is, in the plane orthogonal to the axial direction of the tapping screw 40, where the walls defining the prepared hole 50 are positioned outside the alternate long and two short dashes line representing the imaginary circle defining the major diameter DA of the tapping screw 40. Of the walls defining the prepared hole 50, the walls positioned in the contact region A1 are referred to as tapping-target walls 51, and the walls positioned in the non-contact region A2 are referred to as non-tapping-target walls 52.

The non-contact region A2 accounts for, in the plane orthogonal to the axial direction of the tapping screw 40, approximately 30% of the circumference of the imaginary circle defining the major diameter DA of the tapping screw 40. Of the volume between the imaginary co-axial cylinders defining the major and minor diameters DA and DB of the tapping screw 40, the not-to-be-tapped volume accounts for approximately 30%.

The walls defining the prepared hole 50 are arranged in a point-symmetric manner and centered on the central axis of the prepared hole 50. In other words, the tapping-target walls 51 are point-symmetric, and so are the non-tapping-target walls 52. There are four tapping-target walls 51 and four non-tapping-target walls 52 alternating with each other.

The tapping-target walls 51 in the contact region A1 are, in the plane orthogonal to the axial direction of the tapping screw 40, parallel to the circumference of the imaginary circle defining the major diameter DA of the tapping screw 40 and centered on the center of the prepared hole 50. More specifically, the tapping-target walls 51 draw, in the plane orthogonal to the axial direction of the tapping screw 40, a curved line and overlap the imaginary circle defining the minor diameter DB. In other words, when the tapping screw 40 is screwed into the prepared hole 50, the same tightening torque is produced at any position on the tapping-target walls 51. As shown in Fig. 8, the dotted portion of the tapping-target walls 51 are tapped and engaged with the tapping screw 40. In the upper right section of the drawing, when seen in the axial direction of the tapping screw 40, the crests of the tapping screw 40 are positioned above the tapping-target walls 51.

The non-tapping-target walls 52 in the non-contact region A2 draw, in the plane orthogonal to the axial direction of the tapping screw 40, a curved line parallel to the circumference of the imaginary circle defining the major diameter DA of the tapping screw 40 and centered on the center of the prepared hole 50.

In the non-contact region A2, an accommodating portion 53 is provided for accommodating the chips produced during the tapping by the tapping screw 40. The accommodating portion 53 is positioned outside the imaginary circle defining the major diameter DA of the tapping screw 40 and demarcated by the non-tapping-target walls 52 and side surfaces 51A of the tapping-target walls 51.

As described above, the non-contact region A2 is provided in the prepared hole 50. This can reduce the to-be-tapped area in the plane orthogonal to the axial direction of the tapping screw 40, thereby lowering the tightening torque. On the tapping-target walls 51, the tapping width remains constant. Accordingly, the tightening torque remains unchanged on the tapping-target walls 51. In this manner, the tightening torque can be stabilized.

Advantageous effects of the second embodiment will be now described. The following advantageous effects are obtained in addition to the advantageous effects (1), (2), and (4) to (7) of the first embodiment.

(8) The distance between the contact region A1 and the tapping screw 40 is constant. Accordingly, the tapping screw 40 can be positioned at the right position easily and thus stably tightened.

### <Third Embodiment>

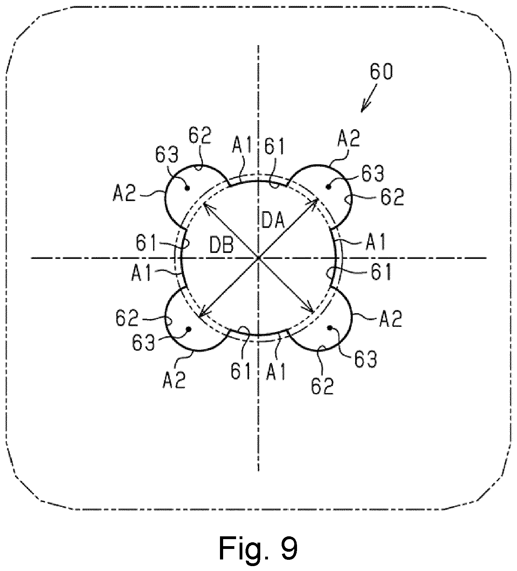

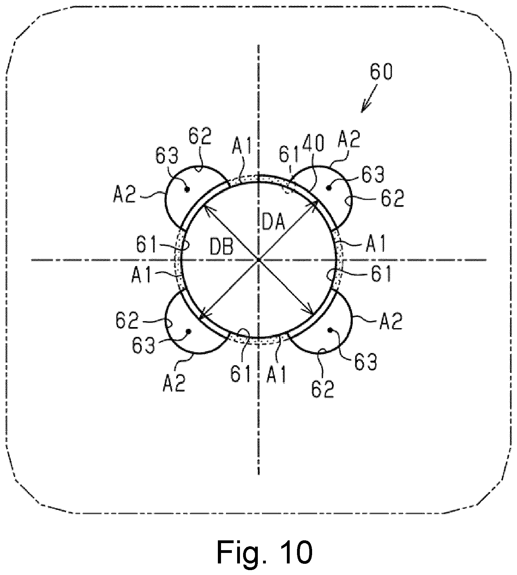

With reference to Figs. 9 and 10, a description is given of a door leaf for a railroad vehicle of a third embodiment according to the present invention. The third embodiment is different from the first embodiment in terms of the shape of the prepared hole. The following description will be focused on the differences from the first embodiment.

As shown in Figs. 9 and 10, the horizontal frame 22 has a prepared hole 60 formed therein, into which the tapping screw 40 is to be screwed. In the plane orthogonal to the axial direction of the tapping screw 40, the walls defining the prepared hole 60 are divided into a contact region A1 where the walls are tapped by the tapping screw 40 and a non-contact region A2 where the walls do not touch the tapping screw 40 and are thus not tapped. The contact region A1 is, in the plane orthogonal to the axial direction of the tapping screw 40, where the walls defining the prepared hole 60 are positioned inside the alternate long and two short dashes line representing the imaginary circle defining the major diameter DA of the tapping screw 40. The non-contact region A2 is, in the plane orthogonal to the axial direction of the tapping screw 40, where the walls defining the prepared hole 60 are positioned outside the alternate long and two short dashes line representing the imaginary circle defining the major diameter DA of the tapping screw 40. Of the walls defining the prepared hole 60, the walls positioned in the contact region A1 are referred to as tapping-target walls 61, and the walls positioned in the non-contact region A2 are referred to as non-tapping-target walls 62.

The non-contact region A2 accounts for, in the plane orthogonal to the axial direction of the tapping screw 40, approximately 50% of the circumference of the imaginary circle defining the major diameter DA of the tapping screw 40. Of the volume between the imaginary co-axial cylinders defining the major and minor diameters DA and DB of the tapping screw 40, the not-to-be-tapped volume accounts for approximately 50%.

The walls defining the prepared hole 60 are arranged in a point-symmetric manner and centered on the central axis of the prepared hole 60. In other words, the tapping-target walls 61 are point-symmetric, and so are the non-tapping-target walls 62. There are four tapping-target walls 61 and four non-tapping-target walls 62 alternating with each other.

The tapping-target walls 61 in the contact region A1 are, in the plane orthogonal to the axial direction of the tapping screw 40, parallel to the circumference of the imaginary circle defining the major diameter DA of the tapping screw 40 and centered on the center of the prepared hole 60. More specifically, the tapping-target walls 61 draw, in the plane orthogonal to the axial direction of the tapping screw 40, a curved line and overlap the imaginary circle defining the minor diameter DB. In other words, when the tapping screw 40 is screwed into the prepared hole 60, the same tightening torque is produced at any position on the tapping-target walls 61. As shown in Fig. 10, the dotted portion of the tapping-target walls 61 are tapped and engaged with the tapping screw 40. In the upper right section of the drawing, when seen in the axial direction of the tapping screw 40, the crests of the tapping screw 40 are positioned above the tapping-target walls 61.

The non-tapping-target walls 62 in the non-contact region A2 draw, in the plane orthogonal to the axial direction of the tapping screw 40, an arc of a circle centered on a point different from the screw axis of the tapping screw 40.

In the non-contact region A2, an accommodating portion 63 is provided for accommodating the chips produced during the tapping by the tapping screw 40. The accommodating portion 63 is positioned outside the imaginary circle defining the major diameter DA of the tapping screw 40 and demarcated by the non-tapping-target walls 62.

As described above, the non-contact region A2 is provided in the prepared hole 60. This can reduce the to-be-tapped area in the plane orthogonal to the axial direction of the tapping screw 40, thereby lowering the tightening torque. On the tapping-target walls 61, the tapping width remains constant. Accordingly, the tightening torque remains unchanged on the tapping-target walls 61. In this manner, the tightening torque can be stabilized. According to the third embodiment, the advantageous effects (1), (2), and (4) to (7) of the first embodiment and (8) of the second embodiment are obtained.

### <Fourth Embodiment>

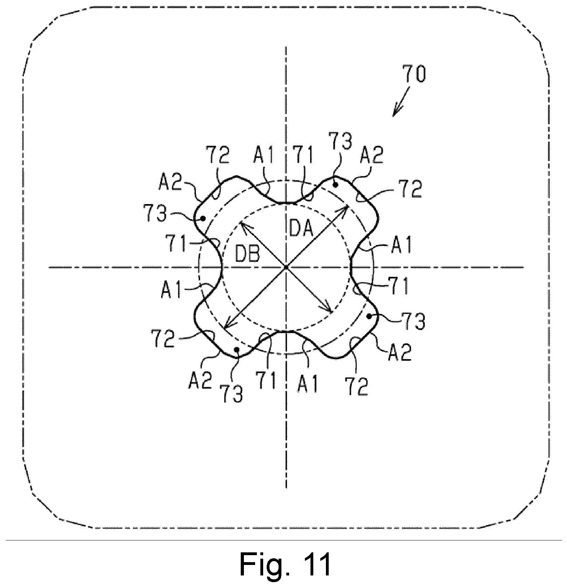

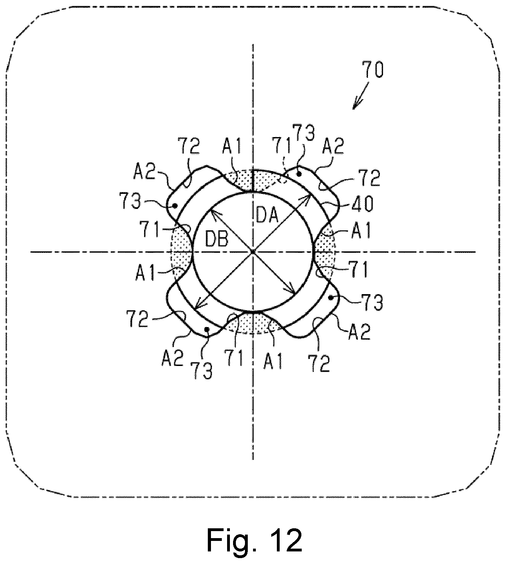

With reference to Figs. 11 and 12, a description is given of a door leaf for a railroad vehicle of a fourth embodiment according to the present invention. The fourth embodiment is different from the first embodiment in terms of the shape of the prepared hole. The following description will be focused on the differences from the first embodiment.

As shown in Figs. 11 and 12, the horizontal frame 22 has a prepared hole 70 formed therein, into which the tapping screw 40 is to be screwed. In the plane orthogonal to the axial direction of the tapping screw 40, the walls defining the prepared hole 70 are divided into a contact region A1 where the walls are tapped by the tapping screw 40 and a non-contact region A2 where the walls do not touch the tapping screw 40 and are thus not tapped. The contact region A1 is, in the plane orthogonal to the axial direction of the tapping screw 40, where the walls defining the prepared hole 70 are positioned inside the alternate long and two short dashes line representing the imaginary circle defining the major diameter DA of the tapping screw 40. The non-contact region A2 is, in the plane orthogonal to the axial direction of the tapping screw 40, where the walls defining the prepared hole 70 are positioned outside the alternate long and two short dashes line representing the imaginary circle defining the major diameter DA of the tapping screw 40. Of the walls defining the prepared hole 70, the walls positioned in the contact region A1 are referred to as tapping-target walls 71, and the walls positioned in the non-contact region A2 are referred to as non-tapping-target walls 72.

The non-contact region A2 accounts for, in the plane orthogonal to the axial direction of the tapping screw 40, approximately 60% of the circumference of the imaginary circle defining the major diameter DA of the tapping screw 40. Of the volume between the imaginary co-axial cylinders defining the major and minor diameters DA and DB of the tapping screw 40, the not-to-be-tapped volume accounts for approximately 60%.

The walls defining the prepared hole 70 are arranged in a point-symmetric manner and centered on the central axis of the prepared hole 70. In other words, the tapping-target walls 71 are point-symmetric, and so are the non-tapping-target walls 72. There are four tapping-target walls 71 and four non-tapping-target walls 72 alternating with each other.

The wall surface of the tapping-target walls 71 in the contact region A1 has, in the plane orthogonal to the axial direction of the tapping screw 40, a portion outside the imaginary circle defining the minor diameter DB of the tapping screw 40 and centered on the center of the prepared hole 70. Here, the wall surface defines the boundary surface between the prepared hole 70 and the horizontal frame 22. More specifically, in the plane orthogonal to the axial direction of the tapping screw 40, the wall surface of the tapping-target walls 71 draws a curved line, the circumferentially middle point of the wall surface of the tapping-target walls 71 touches the imaginary circle defining the minor diameter DB, and the ends of the wall surface of the tapping-target walls 71 are close to the imaginary circle defining the major diameter DA. In other words, when the tapping screw 40 is screwed into the prepared hole 70, the tightening torque is maximized at the middle portion of the tapping-target walls 71. As the tapping screw 40 is increasingly screwed into the prepared hole 70, the contact area between the tapping screw 40 and the tapping-target walls 71 gradually increases, which increases the tightening torque. As shown in Fig. 12, the dotted portion of the tapping-target walls 71 are tapped and engaged with the tapping screw 40. In the upper right section of the drawing, when seen in the axial direction of the tapping screw 40, the crests of the tapping screw 40 are positioned above the tapping-target walls 71. Accordingly, when compared with the second and third embodiments where the tapping screw 40 evenly touches the tapping-target walls 51 and 61, the tightening torque can be reduced.

The non-tapping-target wall 72 in the non-contact region A2 have, in the plane orthogonal to the axial direction of the tapping screw 40, a portion outside the imaginary circle defining the major diameter DA of the tapping screw 40. More specifically, the non-tapping-target walls 72 draw, in the plane orthogonal to the axial direction of the tapping screw 40, a straight line and curved lines connecting with the tapping-target walls 71.

In the non-contact region A2, an accommodating portion 73 is provided for accommodating the chips produced during the tapping by the tapping screw 40. The accommodating portion 73 is positioned outside the imaginary circle defining the major diameter DA of the tapping screw 40 and demarcated by the non-tapping-target walls 72.

As described above, the non-contact region A2 is provided in the prepared hole 70. This can reduce the to-be-tapped area in the plane orthogonal to the axial direction of the tapping screw 40, thereby lowering the tightening torque. The tapping-target walls 71 are gradually removed such that the middle portion is first removed and the tapping width gradually increases. Accordingly, the tightening torque is maximized at the middle of the tapping-target walls 71. In this manner, less tightening torque can be produced at the tapping-target walls 71. According to the fourth embodiment, the advantageous effects (1) to (7) of the first embodiment are obtained.

### <Fifth Embodiment>

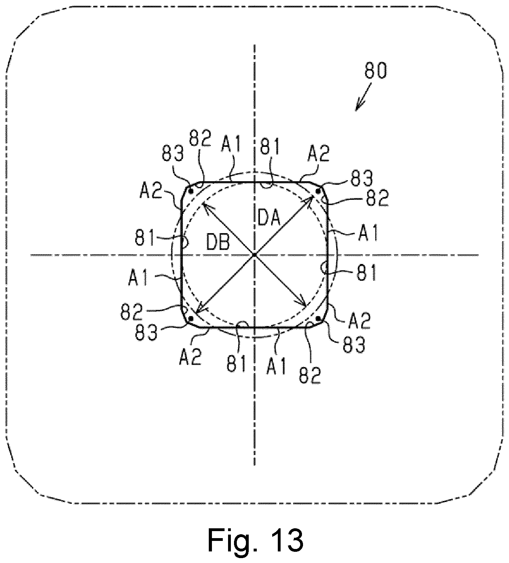

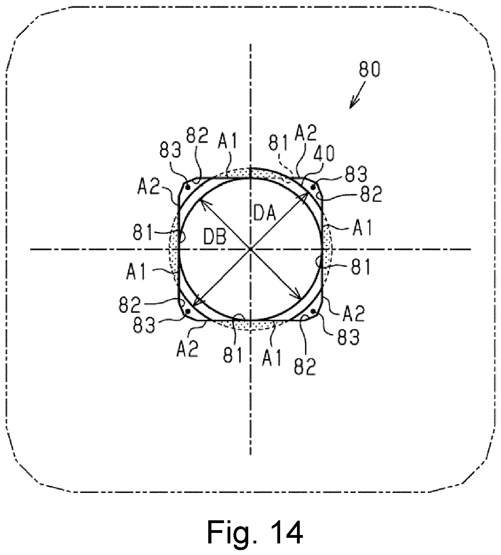

With reference to Figs. 13 and 14, a description is given of a door leaf for a railroad vehicle of a fifth embodiment according to the present invention. The fifth embodiment is different from the first embodiment in terms of the shape of the prepared hole. The following description will be focused on the differences from the first embodiment.

As shown in Figs. 13 and 14, the horizontal frame 22 has a prepared hole 80 formed therein, into which the tapping screw 40 is to be screwed. In the plane orthogonal to the axial direction of the tapping screw 40, the walls defining the prepared hole 80 are divided into a contact region A1 where the walls are tapped by the tapping screw 40 and a non-contact region A2 where the walls do not touch the tapping screw 40 and are thus not tapped. The contact region A1 is, in the plane orthogonal to the axial direction of the tapping screw 40, where the walls defining the prepared hole 80 are positioned inside the alternate long and two short dashes line representing the imaginary circle defining the major diameter DA of the tapping screw 40. The non-contact region A2 is, in the plane orthogonal to the axial direction of the tapping screw 40, where the walls defining the prepared hole 80 are positioned outside the alternate long and two short dashes line representing the imaginary circle defining the major diameter DA of the tapping screw 40. Of the walls defining the prepared hole 80, the walls positioned in the contact region A1 are referred to as tapping-target walls 81, and the walls positioned in the non-contact region A2 are referred to as non-tapping-target walls 82.

The non-contact region A2 accounts for, in the plane orthogonal to the axial direction of the tapping screw 40, approximately 60% of the circumference of the imaginary circle defining the major diameter DA of the tapping screw 40. Of the volume between the imaginary co-axial cylinders defining the major and minor diameters DA and DB of the tapping screw 40, the not-to-be-tapped volume accounts for approximately 60%.

The walls defining the prepared hole 80 are arranged in a point-symmetric manner and centered on the central axis of the prepared hole 80. In other words, the tapping-target walls 81 are point-symmetric, and so are the non-tapping-target walls 82. There are four tapping-target walls 81 and four non-tapping-target walls 82 alternating with each other.

The wall surface of the tapping-target walls 81 in the contact region A1 has, in the plane orthogonal to the axial direction of the tapping screw 40, a portion outside the imaginary circle defining the minor diameter DB of the tapping screw 40 and centered on the center of the prepared hole 80. Here, the wall surface defines the boundary surface between the prepared hole 80 and the horizontal frame 22. More specifically, in the plane orthogonal to the axial direction of the tapping screw 40, the tapping-target walls 81 draw a straight line, the middle of the tapping-target walls 81 touch the imaginary circle defining the minor diameter DB, and the ends of the tapping-target walls 81 are close to the imaginary circle defining the major diameter DA. In other words, when the tapping screw 40 is screwed into the prepared hole 80, the tightening torque is maximized at the middle portion of the tapping-target walls 81. As the tapping screw 40 is increasingly screwed into the prepared hole 80, the contact area between the tapping screw 40 and the tapping-target walls 81 gradually increases, which increases the tightening torque. As shown in Fig. 14, the dotted portion of the tapping-target walls 81 are tapped and engaged with the tapping screw 40. In the upper right section of the drawing, when seen in the axial direction of the tapping screw 40, the crests of the tapping screw 40 are positioned above the tapping-target walls 81. Accordingly, when compared with the second and third embodiments where the tapping screw 40 evenly touches the tapping-target walls 51 and 61, the tightening torque can be reduced.

The non-tapping-target walls 82 in the non-contact region A2 have, in the plane orthogonal to the axial direction of the tapping screw 40, a portion outside the imaginary circle defining the major diameter DA of the tapping screw 40. More specifically, the non-tapping-target walls 82 draw, in the plane orthogonal to the axial direction of the tapping screw 40, a straight line continuous from the tapping-target walls 81 and curved lines connecting with two such straight lines.

In the non-contact region A2, an accommodating portion 83 is provided for accommodating the chips produced during the tapping by the tapping screw 40. The accommodating portion 73 is positioned outside the imaginary circle defining the major diameter DA of the tapping screw 40 and demarcated by the non-tapping-target walls 82.

As described above, the non-contact region A2 is provided in the prepared hole 80. This can reduce the to-be-tapped area in the plane orthogonal to the axial direction of the tapping screw 40, thereby lowering the tightening torque. The tapping-target walls 81 are gradually removed such that the middle portion is first removed and the tapping width gradually increases. Accordingly, the tightening torque is maximized at the middle of the tapping-target walls 81. In this manner, less tightening torque can be produced at the tapping-target walls 81.

Advantageous effects of the fifth embodiment will be now described. The following advantageous effects are obtained in addition to the advantageous effects (1) to (7) of the first embodiment.

(9) Since the tapping-target and non-tapping-target walls 81 and 82 of the prepared hole 80 draw successive straight lines, the prepared hole 80 does not have a complex shape and the horizontal frames 22 can be extrusion-molded more easily than those with a prepared hole having a complex shape formed therein.

### <Other Embodiments>

The foregoing embodiments can be modified as described below. The above embodiments and the following modifications can be implemented in combination to the extent where they are technically consistent with each other.
- In the above-described embodiments, the prepared holes 30, 50, 60, 70, and 80 extend along the entire length of the horizontal frame 22. The prepared holes may, however, have different shapes at different horizontal positions along the length of the horizontal frame 22. In the axial direction of the tapping screw 40, a first position close to the screw head 41 and a second position close to the tip are defined. The walls defining the prepared holes are, in the plane orthogonal to the axial direction of the tapping screw 40 at the first position, divided into a first contact region where the walls touch the tapping screw 40 and a first non-contact region where the walls do not touch the tapping screw 40. The walls defining the prepared holes are, in the plane orthogonal to the axial direction of the tapping screw 40 at the second position, which is closer in the axial direction of the tapping screw 40 to the tip of the tapping screw 40 than the first position is, divided into a second contact region where the walls touch the tapping screw 40 and a second non-contact region where the walls do not touch the tapping screw 40. Here, the ratio of the first non-contact region to the sum of the first contact and non-contact regions may be higher than the ratio of the second non-contact region to the sum of the second contact and non-contact regions. For example, the prepared hole 30 of the first embodiment having a ratio of 50% may be formed at the first position closer to the screw head 41, and the prepared hole 50 of the second embodiment having a ratio of 30% may be formed at the second position closer to the tip. Alternatively, this design may be accomplished by forming a prepared hole extending off the axial direction of the tapping screw 40. In either way, the tightening torque can be weak on the screw head 41 side and the tightening strength can be high at the tip side.
- Alternatively, the non-contact region A2 may be provided only in a partial region in the axial direction of the tapping screw 40. For example, the above design may be implemented by forming the prepared holes 30, 50, 60, 70, and 80 having a depth less than the screw length L of the tapping screw 40.
- In the above-described embodiments, the non-contact region A2 is, in the plane orthogonal to the axial direction of the tapping screw 40, where the walls defining the prepared holes 30, 50, 60, 70, and 80 are positioned outside the alternate long and two short dashes line representing the imaginary circle defining the major diameter DA of the tapping screw 40. Alternatively, the non-contact region A2 may be, however, in the plane orthogonal to the axial direction of the tapping screw 40, where the wall defining the prepared holes 30, 50, 60, 70, and 80 are positioned on the alternate long and two short dashes line representing the imaginary circle defining the major diameter DA of the tapping screw 40. In this case, no accommodating portions are provided.
- In the above-described embodiments, the walls defining the prepared holes 30, 50, 60, 70 and 80 are arranged in a point-symmetric manner and centered on the central axis of the prepared holes 30, 50, 60, 70 and 80. The walls defining the prepared holes, however, may be arranged in a manner other than the point-symmetric manner.
- In the above-described embodiments, the prepared holes 30, 50, 60, 70, and 80 are extrusion-molded in the horizontal frames 22 but may be alternatively formed in the horizontal frames 22 via cutting or other techniques.
- The length of the prepared holes may be less than the entire length of the horizontal frames 22 as long as it is equal to or longer than the screw length L of the tapping screw when measured from the opening.
- In the above-described embodiments, the first, second, and third spaces 22A, 22B, and 22C are provided in the horizontal frames 22, but any or no spaces may be provided in the horizontal frames 22.
- In the above-described embodiments, the tapping screw 40 is a type-B tapping screw but is not limited to such and may be a type-A tapping screw, having a drilling point, threaded to the tip end, and having a more coarse thread pitch than a type-B tapping screw, a type-C tapping screw, having a blunt point and a finer thread pitch than a type-B tapping screw, or a type-AB tapping screw, having a drilling point, threaded to the tip end, and having the same thread pitch as a type-B tapping screw. Alternatively, a thread cutting screw having a cutting edge at the tip thereof may be used. As a further another example, a tapping screw having a threaded portion with a triangular cross-section may be used.
- In the above-described embodiments, the screw head 41 of the tapping screw 40 is a truss head, but can be of other types such as flat head, raised countersunk head, and pan head.
- In the above-described embodiments, the size of the prepared holes may be changed depending on the major and minor diameters DA and DB of the tapping screw 40.
- In the above-described embodiments, the prepared holes 30, 50, 60, 70, and 80 are provided in the horizontal frames 22, which are referred to as the second member, and the second through hole 21B is provided in the vertical frames 21, which are referred to as the first member. However, the through hole may be provided in the horizontal frames, which are referred to as the first member, and the prepared hole may be provided in the vertical frames, which are referred to as the second member. In this case, the horizontal frames may be fastened onto the vertical frames with the tapping screws.
- In the above-described embodiments, the vertically lower portion of the door leaf 10 is curved toward the inside of the railroad vehicle, but may not be curved and instead draw a straight line.
- In the above-described embodiments, the fastening structure in the frame 20 of the railroad vehicle door leaf 10 includes the tapping screw and the prepared hole, which may be used as a fastening structure constituted by two members in other structures than the frame of a railroad vehicle door leaf.
- In the above-described embodiments, the two members are fastened together not using welding but using the tapping screw and the prepared hole. If the two members are subjected to welding after being fastened together using the tapping screw and the prepare hole, however, this may reduce the distortion that can result from the welding and eliminate the need of the correction to satisfy the required precision.

## Claims

1. A fastening structure for fastening together a first member (21) and a second member (22) of a door leaf for a railroad vehicle,
the fastening structure comprising a tapping screw (40) and a prepared hole, whereby the screw is to be screwed into the prepared hole (30; 50; 60; 70; 80) provided in the second member (22) while tapping the prepared hole (30; 50; 60; 70; 80), so that the tapping screw (40) fastens together the first and second members (21, 22),
wherein walls defining the prepared hole (30; 50; 60; 70; 80) in the second member (22) have, in a plane orthogonal to an axial direction of the tapping screw (40), a non-contact region (A2) where the walls do not touch the tapping screw (40), and
wherein the non-contact region (A2) accounts for, in the plane orthogonal to the axial direction of the tapping screw (40), 20% to 80% of a circumference of an imaginary circle defining a major diameter (DA) of the tapping screw (40).

2. A door leaf (10) for a railroad vehicle, the door leaf (10) including a first member (21) and a second member (22), the door leaf (10) comprising
a tapping screw (40) screwed into a prepared hole (30; 50; 60; 70; 80) provided in the second member (22) while tapping the prepared hole (30; 50; 60; 70; 80), so that the tapping screw (40) fastens together the first and second members (21, 22),
wherein walls defining the prepared hole (30; 50; 60; 70; 80) in the second member (22) have, in a plane orthogonal to an axial direction of the tapping screw (40), a non-contact region (A2) where the walls do not touch the tapping screw (40), and
wherein the non-contact region (A2) accounts for, in the plane orthogonal to the axial direction of the tapping screw (40), 20% to 80% of a circumference of an imaginary circle defining a major diameter (DA) of the tapping screw (40).

3. The door leaf (10) for a railroad vehicle of claim 2,
wherein, in the plane orthogonal to the axial direction of the tapping screw (40), the non-contact region (A2) is positioned outside an imaginary circle defining a major diameter (DA) of the tapping screw (40).

4. The door leaf (10) for a railroad vehicle of claim 2 or 3,
wherein the walls defining the prepared hole (50; 60) have, in the plane orthogonal to the axial direction of the tapping screw (40), a contact region (A1) where the walls touch the tapping screw (40), and
wherein, of the walls in the contact region (A1), one or more walls extending in a circumferential direction of the tapping screw (40) are, in the plane orthogonal to the axial direction of the tapping screw (40), parallel to a circumference of an imaginary circle defining a major diameter (DA) of the tapping screw (40) and centered on a center of the prepared hole (50; 60).

5. The door leaf (10) for a railroad vehicle of claim 2 or 3,
wherein the walls defining the prepared hole (30; 70; 80) have, in the plane orthogonal to the axial direction of the tapping screw (40), a contact region (A1) where the walls touch the tapping screw (40), and
wherein a wall surface in the contact region (A1) has, in the plane orthogonal to the axial direction of the tapping screw (40), a portion outside an imaginary circle defining a minor diameter (DB) of the tapping screw (40) and centered on a center of the prepared hole (30; 70; 80).

6. The door leaf (10) for a railroad vehicle of any one of claims 2 to 5, wherein the walls defining the prepared hole (30; 50; 60; 70; 80) are arranged in a point-symmetric manner and centered on a central axis of the prepared hole (30; 50; 60; 70; 80).

7. The door leaf (10) for a railroad vehicle of any one of claims 2 to 6, wherein, of a volume between imaginary co-axial cylinders defining major and minor diameters (DA, DB) of the tapping screw (40), a not-to-be-tapped volume accounts for 20% to 80%.

8. The door leaf (10) for a railroad vehicle of any one of claims 2 to 7, wherein the walls defining the prepared hole (30; 50; 60; 70; 80) are divided into:
in a plane orthogonal to the axial direction of the tapping screw (40) at a first position, a first contact region where the walls touch the tapping screw (40) and a first non-contact region where the walls do not touch the tapping screw (40); and
in a plane orthogonal to the axial direction of the tapping screw (40) at a second position, the second position being closer in the axial direction of the tapping screw (40) to a tip of the tapping screw (40) than the first position is, a second contact region where the walls touch the tapping screw (40) and a second non-contact region where the walls do not touch the tapping screw (40), and
wherein the ratio of the first non-contact region to the sum of the first contact and non-contact regions is higher than the ratio of the second non-contact region to the sum of the second contact and non-contact regions.

9. The door leaf (10) for a railroad vehicle of any one of claims 2 to 8, wherein the non-contact region (A2) is provided in a partial region in the axial direction of the tapping screw (40).

10. The door leaf (10) for a railroad vehicle of any one of claims 2 to 9, wherein, in the non-contact region (A2), an accommodating portion (33; 53; 63; 73; 83) is further provided for accommodating chips produced during tapping by the tapping screw (40).

11. The door leaf (10) for a railroad vehicle of any one of claims 2 to 10, wherein the second member (22) having the prepared hole (30; 50; 60; 70; 80) provided therein is extrusion-molded.

12. The door leaf (10) for a railroad vehicle of any one of claims 2 to 11, wherein the door leaf (10) includes a frame made up by vertical and horizontal frames (21, 22), one of the first and second members (21, 22) is the vertical frame (21) and the other of the first and second members (21, 22) is the horizontal frame (22).

13. The door leaf (10) for the railroad vehicle of claim 12, wherein the first member (21) is the vertical frame (21) and the second member (22) is the horizontal frame (22).

14. A method of manufacturing a door leaf (10) for a railroad vehicle, wherein
the door leaf (10) includes a first member (21) and a second member (22),
the second member (22) is provided with a prepared hole (30; 50; 60; 70; 80) into which a tapping screw (40) is to be screwed,
walls defining the prepared hole (30; 50; 60; 70; 80) have, in a plane orthogonal to an axial direction of the tapping screw (40), a non-contact region (A2) where the walls do not touch the tapping screw (40),and
the non-contact region (A2) accounts for, in the plane orthogonal to the axial direction of the tapping screw (40), 20% to 80% of a circumference of an imaginary circle defining a major diameter (DA) of the tapping screw (40),
the method comprising
fastening together the first and second members (21, 22) by screwing the tapping screw (40) into the prepared hole (30; 50; 60; 70; 80) in the second member (22) while the tapping screw (40) is tapping the prepared hole (30; 50; 60; 70; 80).

## Patentansprüche

1. Befestigungsstruktur, mit der ein erstes Element (21) und ein zweites Element (22) eines Türblatts für ein Schienenfahrzeug aneinander befestigt werden,
wobei die Befestigungsstruktur umfasst:
eine Schneidschraube (40) und ein vorbereitetes Loch, wobei die Schraube in das in dem zweiten Element (22) vorhandene vorbereitete Loch (30; 50; 60; 70; 80) eingeschraubt wird und dabei ein Gewinde in das vorbereitete Loch (30; 50; 60; 70; 80) schneidet, so dass die Schneidschraube (40) das erste und das zweite Element (21, 22) aneinander befestigt,
wobei Wände, die das vorbereitete Loch (30; 50; 60; 70; 80) in dem zweiten Element (22) bilden, in einer Ebene orthogonal zu einer axialen Richtung der Schneidschraube (40), einen kontaktlosen Bereich (A2) haben, in dem die Wände die Schneidschraube (40) nicht berühren, und
der kontaktlose Bereich (A2) in der Ebene orthogonal zu der axialen Richtung der Schneidschraube (40) 20 % bis 80 % eines Umfangs eines imaginären Kreises ausmacht, der einen Außendurchmesser (DA) der Schneidschraube (40) bildet.

2. Türblatt (10) für ein Schienenfahrzeug, wobei das Türblatt (10) ein erstes Element (21) und ein zweites Element (22) enthält und das Türblatt (10) umfasst:
eine Schneidschraube (40), die in ein in dem zweiten Element (22) vorhandenes vorbereitetes Loch (30; 50; 60; 70; 80) eingeschraubt wird und dabei ein Gewinde in das vorbereitete Loch (30; 50; 60; 70; 80) schneidet, so dass die Schneidschraube (40) das erste und das zweite Element (21, 22) aneinander befestigt,
wobei Wände, die das vorbereitete Loch (30; 50; 60; 70; 80) in dem zweiten Element (22) bilden, in einer Ebene orthogonal zu einer axialen Richtung der Schneidschraube (40), einen kontaktlosen Bereich (A2) haben, in dem die Wände die Schneidschraube (40) nicht berühren, und
der kontaktlose Bereich (A2), in der Ebene orthogonal zu der axialen Richtung der Schneidschraube (40), 20 % bis 80 % eines Umfangs eines imaginären Kreises ausmacht, der einen Außendurchmesser (DA) der Schneidschraube (40) bildet.

3. Türblatt (10) für ein Schienenfahrzeug nach Anspruch 2, wobei,
in der Ebene orthogonal zu der axialen Richtung der Schneidschraube (40), der kontaktlose Bereich (A2) außerhalb eines imaginären Kreises positioniert ist, der einen Außendurchmesser (DA) der Schneidschraube (40) bildet.

4. Türblatt (10) für ein Schienenfahrzeug nach Anspruch 2 oder 3, wobei
die Wände, die das vorbereitete Loch (50; 60) bilden, in der Ebene orthogonal zu der axialen Richtung der Schneidschraube (40), einen Kontaktbereich (A1) haben, in dem die Wände die Schneidschraube (40) berühren, und
von den Wänden in dem Kontaktbereich (A1) eine oder mehrere Wand/Wände, die sich in einer Umfangsrichtung der Schneidschraube (40) erstreckt/erstrecken, in der Ebene orthogonal zu der axialen Richtung der Schneidschraube (40), parallel zu einem Umfang eines imaginären Kreises sind, der einen Außendurchmesser (DA) der Schneidschraube (40) bildet und auf einen Mittelpunkt des vorbereiteten Lochs (50; 60) zentriert ist.

5. Türblatt (10) für ein Schienenfahrzeug nach Anspruch 2 oder 3, wobei
die Wände, die das vorbereitete Loch (30; 70; 80) bilden, in der Ebene orthogonal zu der axialen Richtung der Schneidschraube (40), einen Kontaktbereich (A1) haben, in dem die Wände die Schneidschraube (40) berühren, und
eine Wandfläche in dem Kontaktbereich (A1), in der Ebene orthogonal zu der axialen Richtung der Schneidschraube (40), ein Abschnitt außerhalb eines imaginären Kreises hat, der einen Kerndurchmesser (DB) der Schneidschraube (40) bildet und auf einen Mittelpunkt des vorbereiteten Lochs (30; 70; 80) zentriert ist.

6. Türblatt (10) für ein Schienenfahrzeug nach einem der Ansprüche 2 bis 5, wobei
die Wände, die das vorbereitete Loch (30; 50; 60; 70; 80) bilden, punktsymmetrisch angeordnet und auf eine Mittelachse des vorbereiteten Lochs (30; 50; 60; 70; 80) zentriert sind.

7. Türblatt (10) für ein Schienenfahrzeug nach einem der Ansprüche 2 bis 6, wobei
von einem Volumen zwischen imaginären koaxialen Zylindern, die den Außendurchmesser und den Kerndurchmesser (DA, DB) der Schneidschraube (40) bilden, das nicht zu schneidende Volumen 20 % bis 80 % ausmacht.

8. Türblatt (10) für ein Schienenfahrzeug nach einem der Ansprüche 2 bis 7, wobei die Wände, die das vorbereitete Loch (30; 50; 60; 70; 80) bilden, unterteilt sind in:
in einer Ebene orthogonal zu der axialen Richtung der Schneidschraube (40) an einer ersten Position, einen ersten Kontaktbereich, in dem die Wände die Schneidschraube (40) berühren, und einen ersten kontaktlosen Bereich, in dem die Wände die Schneidschraube (40) nicht berühren; und
in einer Ebene orthogonal zu der axialen Richtung der Schneidschraube (40) an einer zweiten Position, einen zweiten Kontaktbereich, in dem die Wände die Schneidschraube (40) berühren, sowie einen zweiten kontaktlosen Bereich, in dem die Wände die Schneidschraube (40) nicht berühren, wobei die zweite Position in der axialen Richtung der Schneidschraube (40) näher an einer Spitze der Schneidschraube (40) liegt als die erste Position, und
das Verhältnis des ersten kontaktlosen Bereiches zu der Summe des ersten Kontaktbereiches und des ersten kontaktlosen Bereiches größer ist als das Verhältnis des zweiten kontaktlosen Bereiches zu der Summe des zweiten Kontaktbereiches und des zweiten kontaktlosen Bereiches.

9. Türblatt (10) für ein Schienenfahrzeug nach einem der Ansprüche 2 bis 8, wobei
der kontaktlose Bereich (A2) sich in einem Teilbereich in der axialen Richtung der Schneidschraube (40) befindet.

10. Türblatt (10) für ein Schienenfahrzeug nach einem der Ansprüche 2 bis 9, wobei
in dem kontaktlosen Bereich (A2) des Weiteren ein Aufnahmeabschnitt (33; 53; 63; 73; 83) zum Aufnehmen von Spänen vorhanden ist, die beim Gewindeschneiden durch die Schneidschraube (40) entstehen.

11. Türblatt (10) für ein Schienenfahrzeug nach einem der Ansprüche 2 bis 10, wobei
das zweite Element (22) mit dem darin vorhandenen vorbereiteten Loch (30; 50; 60; 70; 80) extrudiert wird.

12. Türblatt (10) für ein Schienenfahrzeug nach einem der Ansprüche 2 bis 11, wobei
das Türblatt (10) einen Rahmen einschließt, der aus einem vertikalen sowie einem horizontalen Rahmen (21, 22) besteht, und das erste oder das zweite Element (21, 22) der vertikale Rahmen (21) ist und das andere von dem ersten und dem zweiten Element (21, 22) der horizontale Rahmen (22) ist.

13. Türblatt (10) für das Schienenfahrzeug nach Anspruch 12, wobei
das erste Element (21) der vertikale Rahmen (21) ist und das zweite Element (22) der horizontale Rahmen (22) ist.

14. Verfahren zum Herstellen eines Türblatts (10) für ein Schienenfahrzeug, wobei
das Türblatt (10) ein erstes Element (21) und ein zweites Element (22) enthält,
das zweite Element (22) mit einem vorbereiteten Loch (30; 50; 60; 70; 80) versehen ist, in das eine Schneidschraube (40) eingeschraubt wird,
Wände, die das vorbereitete Loch (30; 50; 60; 70; 80) bilden, in einer Ebene orthogonal zu einer axialen Richtung der Schneidschraube (40), einen kontaktlosen Bereich (A2) haben, in dem die Wände die Schneidschraube (40) nicht berühren, und
der kontaktlose Bereich (A2) in der Ebene orthogonal zu der axialen Richtung der Schneidschraube (40) 20 % bis 80 % eines Umfangs eines imaginären Kreises ausmacht, der einen Außendurchmesser (DA) der Schneidschraube (40) bildet,
und das Verfahren umfasst
Befestigen des ersten und des zweiten Elementes (21, 22) aneinander durch Einschrauben der Schneidschraube (40) in das vorbereitete Loch (30; 50; 60; 70; 80) in dem zweiten Element (22), wobei die Schneidschraube (40) ein Gewinde in das vorbereitete Loch (30; 50; 60; 70; 80) schneidet.

## Revendications

1. Structure de fixation pour fixer ensemble un premier élément (21) et un deuxième élément (22) d'un vantail de porte pour un véhicule ferroviaire, la structure de fixation comprenant
une vis taraudeuse (40) et un trou préparé, moyennant quoi la vis doit être vissée dans le trou préparé (30 ; 50 ; 60 ; 70 ; 80) prévu dans le deuxième élément (22) tout en taraudant le trou préparé (30 ; 50 ; 60 ; 70 ; 80), de sorte que la vis taraudeuse (40) fixe ensemble les premier et deuxième éléments (21, 22),
dans laquelle des parois définissant le trou préparé (30 ; 50 ; 60 ; 70 ; 80) dans le deuxième élément (22) ont, dans un plan orthogonal à une direction axiale de la vis taraudeuse (40), une région de non contact (A2) où les parois ne touchent pas la vis taraudeuse (40), et
dans laquelle la région de non contact (A2) représente, dans le plan orthogonal à la direction axiale de la vis taraudeuse (40), 20% à 80% d'une circonférence d'un cercle imaginaire définissant un diamètre majeur (DA) de la vis taraudeuse (40).

2. Vantail de porte (10) pour un véhicule ferroviaire, le vantail de porte (10) comprenant un premier élément (21) et un deuxième élément (22), le vantail de porte (10) comprenant
une vis taraudeuse (40) vissée dans un trou préparé (30 ; 50 ; 60 ; 70 ; 80) prévu dans le deuxième élément (22) tout en taraudant le trou préparé (30 ; 50 ; 60 ; 70 ; 80), de sorte que la vis taraudeuse (40) fixe ensemble les premier et deuxième éléments (21, 22),
dans lequel des parois définissant le trou préparé (30 ; 50 ; 60 ; 70 ; 80) dans le deuxième élément (22) ont, dans un plan orthogonal à une direction axiale de la vis taraudeuse (40), une région de non contact (A2) où les parois ne touchent pas la vis taraudeuse (40), et
dans lequel la région de non contact (A2) représente, dans le plan orthogonal à la direction axiale de la vis taraudeuse (40), 20% à 80% d'une circonférence d'un cercle imaginaire définissant un diamètre majeur (DA) de la vis taraudeuse (40).

3. Vantail de porte (10) pour un véhicule ferroviaire de la revendication 2, dans lequel, dans le plan orthogonal à la direction axiale de la vis taraudeuse (40), la région de non contact (A2) est positionnée à l'extérieur d'un cercle imaginaire définissant un diamètre majeur (DA) de la vis taraudeuse (40).

4. Vantail de porte (10) pour un véhicule ferroviaire de la revendication 2 ou 3, dans lequel les parois définissant le trou préparé (50 ; 60) ont, dans le plan orthogonal à la direction axiale de la vis taraudeuse (40), une région de contact (A1) où les parois touchent la vis taraudeuse (40), et
dans lequel, parmi les parois dans la région de contact (A1), une ou plusieurs parois s'étendant dans une direction circonférentielle de la vis taraudeuse (40) sont, dans le plan orthogonal à la direction axiale de la vis taraudeuse (40), parallèles à une circonférence d'un cercle imaginaire définissant un diamètre majeur (DA) de la vis taraudeuse (40) et centrées sur un centre du trou préparé (50 ; 60).

5. Vantail de porte (10) pour un véhicule ferroviaire de la revendication 2 ou 3,
dans lequel les parois définissant le trou préparé (30 ; 70 ; 80) ont, dans le plan orthogonal à la direction axiale de la vis taraudeuse (40), une région de contact (A1) où les parois touchent la vis taraudeuse (40), et
dans lequel une surface de paroi dans la région de contact (A1) a, dans le plan orthogonal à la direction axiale de la vis taraudeuse (40), une partie à l'extérieur d'un cercle imaginaire définissant un diamètre mineur (DB) de la vis taraudeuse (40) et centrée sur un centre du trou préparé (30 ; 70 ; 80)

6. Vantail de porte (10) pour un véhicule ferroviaire de l'une quelconque des revendications 2 à 5,
dans lequel les parois définissant le trou préparé (30 ; 50 ; 60 ; 70 ; 80) sont agencées selon une symétrie ponctuelle et centrées sur un axe central du trou préparé (30 ; 50 ; 60 ; 70 ; 80).

7. Vantail de porte (10) pour un véhicule ferroviaire de l'une quelconque des revendications 2 à 6, dans lequel, un volume à ne pas tarauder représente 20 à 80% d'un volume entre des cylindres coaxiaux imaginaires définissant des diamètres majeur et mineur (DA, DB) de la vis taraudeuse (40).

8. Vantail de porte (10) pour un véhicule ferroviaire de l'une quelconque des revendications 2 à 7, dans lequel les parois définissant le trou préparé (30 ; 50 ; 60 ; 70 ; 80) sont divisées :
dans un plan orthogonal à la direction axiale de la vis taraudeuse (40) à une première position, en une première région de contact où les parois touchent la vis taraudeuse (40) et en une première région de non contact où les parois ne touchent pas la vis taraudeuse (40) ; et
dans un plan orthogonal à la direction axiale de la vis taraudeuse (40) à une deuxième position, la deuxième position étant plus proche dans la direction axiale de la vis taraudeuse (40) d'une pointe de la vis taraudeuse (40) que la première position, en une deuxième région de contact où les parois touchent la vis taraudeuse (40) et en une deuxième région de non contact où les parois ne touchent pas la vis taraudeuse (40), et
dans lequel le rapport de la première région de non contact sur la somme des premières régions de contact et de non contact est supérieur au rapport de la deuxième région de non contact sur la somme des deuxièmes régions de contact et de non contact.

9. Vantail de porte (10) pour un véhicule ferroviaire de l'une quelconque des revendications 2 à 8, dans lequel la région de non contact (A2) est prévue dans une région partielle dans la direction axiale de la vis taraudeuse (40).

10. Vantail de porte (10) pour un véhicule ferroviaire de l'une quelconque des revendications 2 à 9, dans lequel, dans la région de non contact (A2), une partie de réception (33 ; 53 ; 63 ; 73 ; 83) est en outre prévue pour recevoir les copeaux produits lors du taraudage par la vis taraudeuse (40).

11. Vantail de porte (10) pour un véhicule ferroviaire de l'une quelconque des revendications 2 à 10, dans lequel le deuxième élément (22) ayant le trou préparé (30 ; 50 ; 60 ; 70 ; 80) prévu dedans est moulé par extrusion.

12. Vantail de porte (10) pour un véhicule ferroviaire de l'une quelconque des revendications 2 à 11, dans lequel le vantail de porte (10) comprend un cadre composé de cadres vertical et horizontal (21, 22), l'un des premier et deuxième éléments (21, 22) est le cadre vertical (21) et l'autre des premier et deuxième éléments (21, 22) est le cadre horizontal (22).

13. Vantail de porte (10) pour le véhicule ferroviaire de la revendication 12, dans lequel le premier élément (21) est le cadre vertical (21) et le deuxième élément (22) est le cadre horizontal (22).

14. Procédé de fabrication d'un vantail de porte (10) pour un véhicule ferroviaire, dans lequel
le vantail de porte (10) comprend un premier élément (21) et un deuxième élément (22),
le deuxième élément (22) est pourvu d'un trou préparé (30 ; 50 ; 60 ; 70 ; 80) dans lequel une vis taraudeuse (40) doit être vissée,
des parois définissant le trou préparé (30 ; 50 ; 60 ; 70 ; 80) ont, dans un plan orthogonal à une direction axiale de la vis taraudeuse (40), une région de non contact (A2) où les parois ne touchent pas la vis taraudeuse (40) et
la région de non contact (A2) représente, dans le plan orthogonal à la direction axiale de la vis taraudeuse (40), 20% à 80% d'une circonférence d'un cercle imaginaire définissant un diamètre majeur (DA) de la vis taraudeuse (40),
le procédé comprenant
fixer ensemble les premier et deuxième éléments (21, 22) en vissant la vis taraudeuse (40) dans le trou préparé (30 ; 50 ; 60 ; 70 ; 80) dans le deuxième élément (22) tandis que la vis taraudeuse (40) taraude le trou préparé (30 ; 50 ; 60 ; 70 ; 80).
